# EUROPEAN PATENT SPECIFICATION

(11) **EP 0 295 920 B1**
(45) Date of publication and mention of the grant of the patent: **18.01.1995**
(21) Application number: 88305520.4
(22) Date of filing: 16.06.1988
(51) Int. Cl.: G11B 23/087

(54) **Magnetic tape cassettes**
Magnetbandkassette
Cassette à bande magnétique

(30) Priority: 18.06.1987 JP 94027/87 U
(43) Date of publication of application: 21.12.1988
(73) Proprietor: SONY CORPORATION, Tokyo 141 (JP)
(72) Inventor: Tanaka, Masato c/o Patents Division, Shinagawa-ku Tokyo 141 (JP)
(74) Representative: Thomas, Christopher Hugo

(56) References cited:
- EP-A- 0 088 438
- EP-A- 0 110 266
- EP-A- 0 125 688
- EP-A- 0 153 085
- EP-A- 0 295 921
- GB-A- 2 152 010

## Description

This invention relates to magnetic tape cassettes. Embodiments of the invention are particularly, but not exclusively, suitable for accommodating therein a magnetic tape on and/or from which a pulse code modulated (PCM) signal is recorded and/or reproduced.

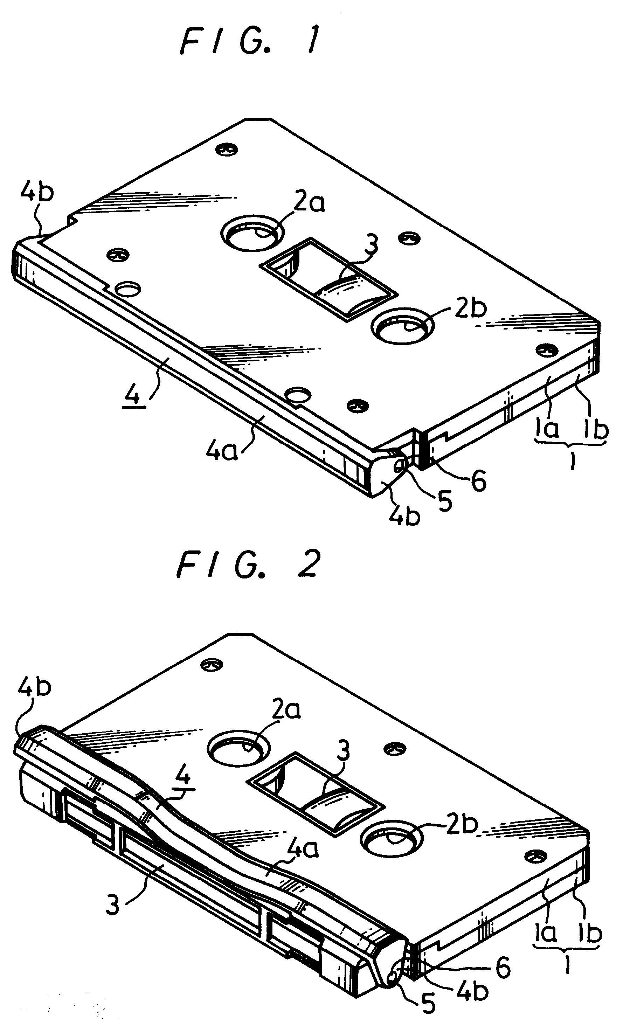

Figures 1 and 2 show a previously proposed magnetic tape cassette in which a magnetic tape for a PCM signal is accommodated.

As Figure 1 shows, a cassette housing 1 comprises an upper half 1a and a lower half 1b, which are secured together by screws. A pair of reel hubs 2a and 2b are mounted rotatably in the housing 1, and a magnetic tape 3 is wound on the reel hubs 2a and 2b. A front lid 4 is pivotably mounted on the housing 1 so as selectively to open or close the front opening portion of the housing 1.

Figure 1 shows the front opening portion of the housing 1 closed by the lid 4. The lid 4 comprises a lid main section 4a and a pair of side supporting sections 4b. The main section 4a has a rectangular configuration having a length and width sufficient for it to close the entire front opening portion of the tape cassette. The side supporting sections 4b extend from the ends of the main section 4a and are bent backwards at a right angle. The side supporting sections 4b each have a respective shaft aperture engaging with a respective shaft 6 provided at a predetermined position on each side wall of the housing 1. The lid 4 is made of a plastics material having sufficient flexibility that when it is urged towards the housing 1 side, it can be engaged with the front opening portion of the housing 1 due to its elastic deformation, and is held at a predetermined position to close the front opening portion of the housing 1.

Figure 2 illustrates the cassette 1 ready for recording or reproduction. The lid 4 is opened manually, or automatically by an automatic lid opening and/or closing mechanism (not shown) of a tape recorder or the like, and the tape 3 is exposed in the front opening portion of the housing 1.

In non-use, as illustrated in Figure 1, the front opening portion of the housing 1 is closed by the lid 4 so as to protect the tape 3 in the front opening portion from being touched, and to prevent dust or smudges getting on the tape 3.

With this magnetic tape cassette, when the lid 4 is open, the lid main section 4a is released from being engaged with the front opening portion of the tape cassette with the result that the side supporting sections 4b of the front lid 4 may move away from the side walls of the cassette housing 1. The front lid 4 could then freely move in the direction perpendicular to its rotational direction, that is, in the axial direction of the shafts 6. Such movement of the front lid 4 may cause it to become detached from the cassette housing 1.

Moreover, in use, the lid 4 is opened with the tape cassette loaded onto a recording and/or reproducing apparatus. Thus, if the lid 4 is moved in the axial direction of the shafts 6 and protrudes form the side walls of the cassette housing 1, the protuding portions of the lid 4 can be accidentally caught somewhere within the apparatus, which may inhibit ejection of the tape cassette.

Furthermore, since in the magnetic tape cassette the lid 4 is pivotably secured to the cassette housing 1 by the shafts 6 which are both of the same diameter, the lid 4 may be pivotably secured to the cassette housing 1 in a reversed condition. In such a case, if the lid 4 is constructed such that it is asymmetrical with respect to the up and down or right and left directions, reversal of the lid 4 results in an unsatisfactory magnetic tape cassette.

In addition, since stopper edge surfaces, with which the side supporting portions 4b and 4c of the lid 4 are brought into contact when the lid 4 of the housing 1 is opened, are formed perpendicular to the upper and lower surfaces of the housing 1, when the lid 4 is closed, relatively large spaces occur between the stopper edge surface and the side supporting portions 4b and 4c, as shown in Figure 1. Accordingly, lid-opening-pins provided in the recording and/or reproducing apparatus for opening the lid 4 tend accidentally to drop into the spaces between the stopper edge surfaces of the housing 1 and the end edges of the side supporting portion 4b and 4c of the lid 4. Thus, the tape cassette is prevented from moving back and forth, and jams.

According to the present invention there is provided a magnetic tape cassette comprising:
a cassette housing having a front opening portion; and
a front lid formed of a lid main section and supporting arm portions attached perpendicularly to said lid main section at respective end portions thereof, said front lid being pivotably mounted on the front of said cassette housing by said supporting arm portions so as selectively to open and close said front opening portion of said cassette housing;
characterized by:
protruded edge portions formed on said cassette housing at supporting portions where said front lid is pivotably secured, said protruded edge portions being tapered so that said supporting arm portions are forced outwardly thereon as said front lid is opened, whereby said lid main section is elastically deformed towards the axis of the pivotal movement.

Preferably each of said supporting arm portions has a generally triangular configuration with an apex at a bearing portion of said supporting arm portion and the opposite base at said lid main section; and
engaging portions engage with said supporting arm portions when said front lid is open, said engaging portions each having a shape complementary to that of said supporting arm portions to engage therewith in the open position of said front lid.

According to another aspect of the invention there is provided a magnetic tape cassette comprising:
a cassette housing having a front opening portion;
a front lid formed of a lid main section and supporting arm portions attached perpendicularly to said lid main section at respective end portions thereof, said front lid being pivotably mounted on the front of said cassette housing by said supporting arm portions so as selectively to open and close said front opening portion of said cassette housing;
characterized by:
stepped portions formed on respective side portions of said front opening portion, said stepped portions being setback as compared with the central portion of said front opening portion;
tape guide rollers provided in said cassette housing at respective side end portions of said front opening portion of said cassette housing such that said rollers are partially visible through said stepped portions;
guide members formed at inner positions of said front opening portion of said cassette housing; and
tapered surface portions formed on said upper and lower edges of said front opening portion, said tapered surface portions being formed so as to decrease in height from the inside of said guide members towards said stepped portions, thereby deforming the lid main section by said stepped portions when the lid is opened or closed.

The invention will now be described by way of example with reference to the accompanying drawings, throughout which like parts are referred to by like references, and in which:
Figures 1 and 2 are perspective views of a previously proposed magnetic tape cassette with its front lid closed and open, respectively;
Figure 3 is a perspective view of an embodiment of magnetic tape cassette according to the present invention;
Figures 4 and 6 are perspective and side views respectively of the cassette of Figure 3 with its front lid open;
Figure 5 is a plan view of the cassette of Figure 3 with parts shown in cross-section;
Figure 7 is an enlarged cross-sectional view taken through the line A-A of Figure 6 looking in the direction of the arrows;
Figure 8 is an enlarged cross-sectional view taken through the line B-B of Figure 5 looking in the direction of the arrows; and
Figure 9 is a perspective view of the cassette of Figure 3 in use.

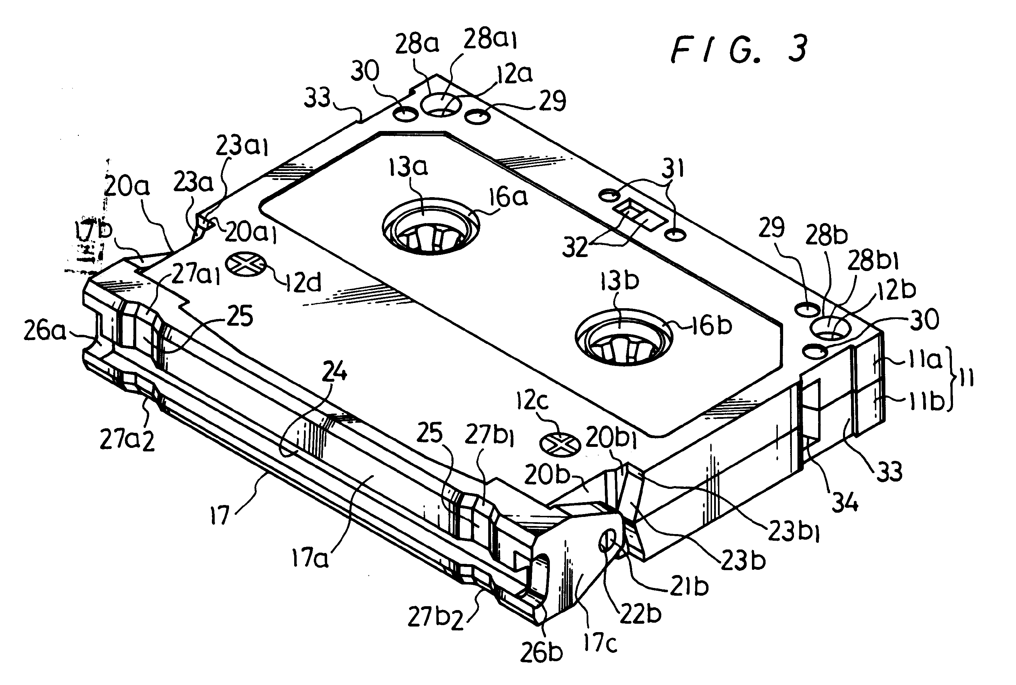

The embodiment of magnetic tape cassette to be described with reference to Figures 3 to 9 may be very small, for example, about 25 x 20 x 5 mm.

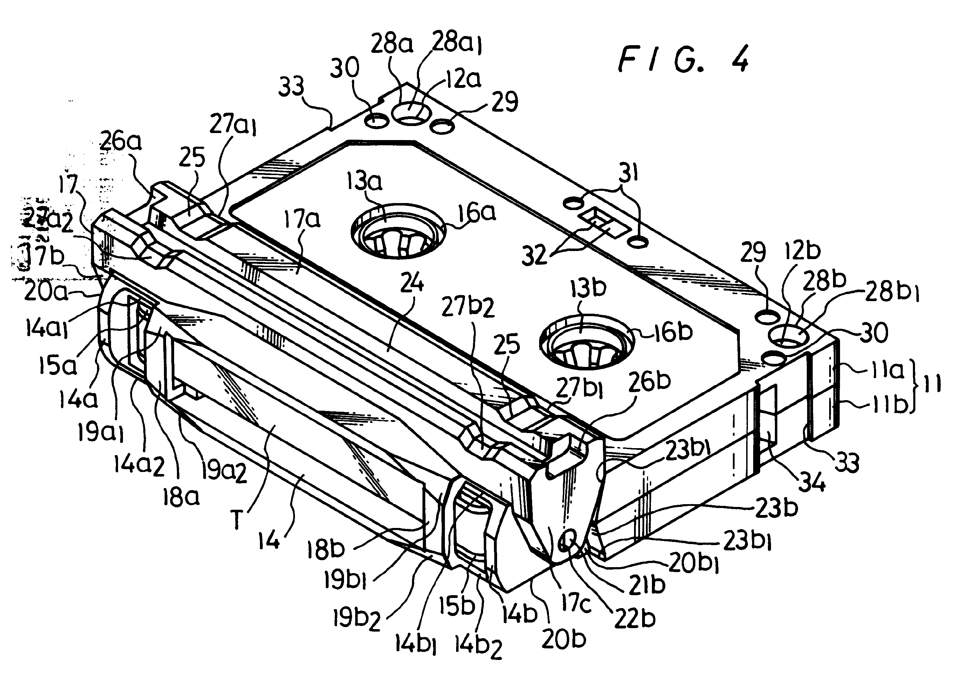

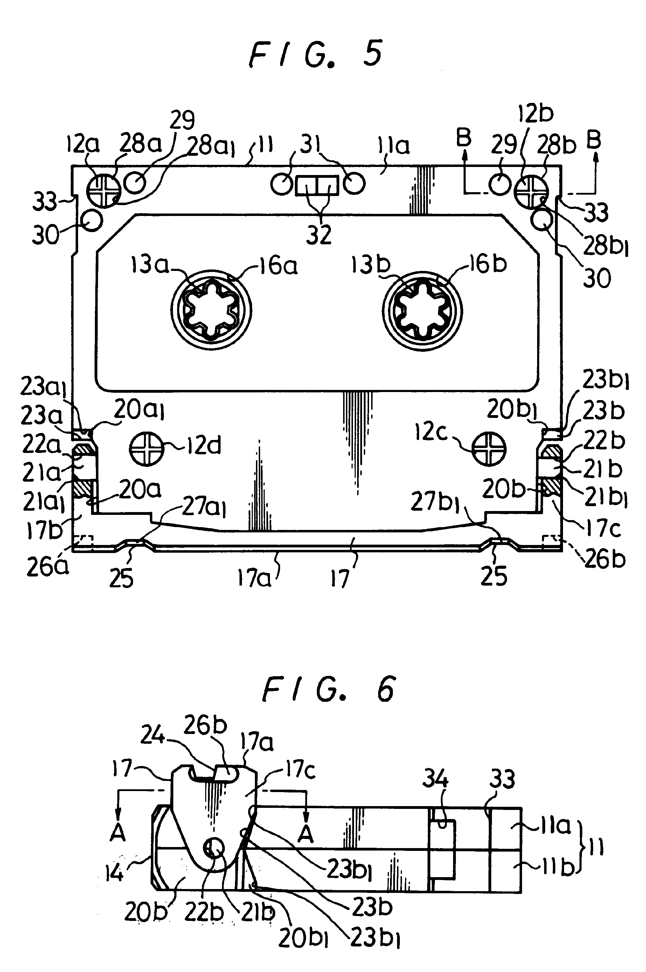

As Figures 3 and 4 show, there is provided a cassette housing 11 in which a magnetic tape T is accommodated. As described above, a PCM signal, for example, is recorded on the tape T. The housing 11 comprises an upper half 11a and a lower half 11b which are secured together by a suitable coupling means such as four screws 12a, 12b, 12c and 12d (see Figure 5). Within the housing 11, the tape T is wound on a pair of tape reels 13a and 13b.

As Figure 4 shows, at the front side of the housing 11, there is formed a front opening portion 14 which occupies substantially the whole front of the housing 11. A pair of guide rollers 15a and 15b are rotatably provided within the housing 11 at the side end portions of the front opening portion 14. Thus, a tape path for the tape T is formed between the guide rollers 15a and 15b in the front opening portion 14 along which the tape T is transported. The tape T passes around the guide rollers 15a and 15b and is then wound onto the tape reels 13a and 13b. Through the upper and lower walls or on the upper half 11a and the lower half 11b of the housing 11, there are symmetrically formed reel shaft receiving apertures 16a and 16b which receive the tape reels 13a and 13b, respectively.

At the front of the housing 11, a front lid 17 is pivotably mounted so as selectively to open or close the front opening portion 14. As described above, the lid 17 is made of a flexible plastics material and comprises a lid main section 17a opposing the front opening portion 14, and support arm portions 17b and 17c which extend at a right angle from the respective ends of the lid main section 17a towards the rear of the housing 11. The lid main section 17a is biased backwards towards the inside of the housing 11.

In this cassette, as shown in Figure 4, step portions 14a and 14b are respectively formed on side end portions of the front opening portion 14, which forms a part of the tape path portion of the housing 11. The step portions 14a and 14b are respectively recessed rearward as compared with the central portion of the front opening portion 14. On the upper and lower edges of both the step portions 14a and 14b, there are formed cut-away concave portions 14a1, 14b1, 14a2 and 14b2 in such a manner that a part of each of the guide rollers 15a and 15b can be viewed from the upper and lower sides. Guide members 18a and 18b are respectively secured to the front opening portion 14 at positions inside the step portions 14a and 14b so as to bridge the upper and lower edges of the front opening portion 14. The upper and lower edges of the front opening portion 14 are tapered to provide tapered surfaces 19a1, 19b1, 19a2 and 19b2 which are extended and inclined gradually to the rear side from the inside of the guide member 18a and 18b to the step portions 14a and 14b, respectively.

On the front end portions of both side walls of the housing 11, stepped surface portions 20a and 20b are formed so as to oppose the arm portions 17b and 17c of the lid 17 over the upper half 11a and the lower half 11b. The depth of each of the stepped surface portions 20a and 20b is substantially equal to the thickness of each of the arm portions 17b and 17c. As shown in, for example, Figure 5, shafts 21a and 21b are respectively implanted on the stepped surface portions 20a and 20b, while shaft apertures 22a and 22b are respectively formed through the arm portions 17b and 17c of the lid 17. The apertures 22a and 22b of the arm portions 17b and 17c of the lid 17 are rotatably engaged with the shafts 21a and 21b respectively, so that the lid 17 is rotatable upwardly or downwardly with respect to the housing 11, so as selectively to open or close the front opening portion 14.

When the lid 17 closes the front opening portion 14, the lid main section 17a is elastically deformed, and is brought into contact with the upper and lower edges of the front opening portion 14, that is, the front end edges of the upper half 11a and the lower half 11b and is thereby supported. When the lid 17 closes the front opening portion 14, as the lid main section 17a is elastically deformed, the arm portions 17b and 17c are inwardly biased and brought into contact with the stepped surface portions 20a and 20b respectively of the housing 11, so the outer surfaces of both the arm portions 17b and 17c are substantially flush with the outer surfaces of the side walls of the housing 11, as shown in Figure 5.

When the lid main section 17a is in contact with the upper or lower edge of the front opening portion 14 of the housing 11 while the lid 17 is being rotated to open the front opening portion 14, the elastic deformation of the lid main section 17a is a maximum, so it is in the engaged state, or the dead point position. When the lid main section 17a passes this dead point position, it recovers from the deformed state and the lid 17 is rotated upwardly or downwardly to open the front opening portion 14 of the housing 11, with a so-called click operation. In this condition, the arm portions 17b and 17c are free from the biasing force of the lid main section 17a, and they are released from contact with the stepped surface portions 20a and 20b of the housing 11. Then, clearances could be produced between the arm portions 17b and 17c and the stepped surface portions 20a and 20b, and the lid 17 could slide in the lateral direction.

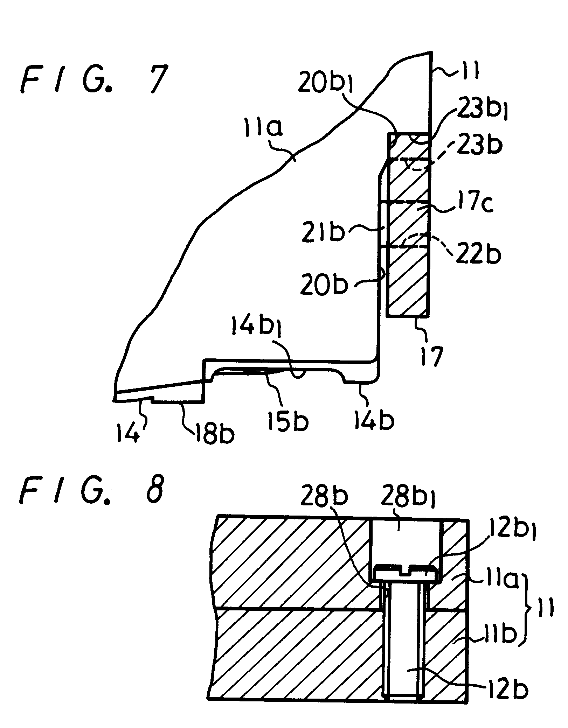

To overcome this problem, as shown, for example, in Figure 5, outwardly-protruded edge surfaces 20a1 and 20b1 are respectively formed on the stepped surface portions 20a and 20b of the housing 11 at positions so as to come into contact with the inner surfaces of the arm portions 17b and 17c when the lid 17 is opened (Figure 7). The protruded edge surfaces 20a1 and 20b1 are formed and positioned such that both the side arm portions 17b and 17c can climb the protruded edge surfaces 20a1 and 20b1 as the lid 17 is opened, and the opened lid 17 can be maintained in a stable manner.

As shown in Figure 3, the rear half portion of each of the arm portions 17b and 17c of the lid 17 is formed to have a substantially fan-like configuration which is spread in the forward direction from each of the peripheries of the shaft apertures 22a and 22b. Meanwhile, stopper edge surfaces 23a and 23b, which are respectively engaged with the arm portions 17b and 17c when the arm portions 17b and 17c are in their opened positions, are respectively formed on the stepped surface portions 20a and 20b of the housing 11. The stopper edge surfaces 23a and 23b are each so shaped that they are along the inclined sides of the rear half portions of the arm portions 17b and 17c, or inclined rearward from the centres symmetrical with respect to the up and down direction (see, for example, Figures 3 and 6). The upper and lower end portions of the edge surfaces 23a and 23b are formed as vertical surfaces 23a1 and 23b1, respectively, as illustrated in Figure 3. Accordingly, the central portions of these stopper edge surfaces 23a and 23b are formed as vertical surfaces 23a1 and 23b1, respectively, as illustrated in Figure 3. Accordingly, the central portions of these stopper edge surfaces 23a and 23b are located in the vicinity of the end edges of the supporting portions of the arm portions 17b and 17c as shown in Figure 3 or Figure 5 when the lid 17 is in its closed state.

As shown in Figure 5, the shafts 21a and 21b which respectively rotatably support the arm portions 17b and 17c of the lid 17 have different diameters and tapered surfaces 21a1 and 21b1 each being inclined forward at the end portions thereof. The apertures 22a and 22b formed through the arm portions 17b and 17c of the lid 17 to receive the shafts 21a and 21b respectively likewise have different inner diameters, so that the lid 17 cannot be mounted on the housing 11 the wrong way round.

As Figures 3 and 4 show, on the front surface of the lid main section 17a, there is formed a guide groove 24 in the longitudinal direction of the lid main section 17a and at a location asymmetrical with respect to the up and down direction. As Figure 10 shows, when a plurality of the magnetic tape cassettes are respectively accommodated into a plurality of compartments partitioning a single cassette magazine (not shown), the guide grooves 24 are respectively engaged with engaging portions provided in the compartments of the cassette magazine, thus making it possible to insert and keep the respective magnetic tape cassettes in the cassette magazine in such a manner that the tracks A and B of the respective magnetic tape cassettes are aligned in the same direction. Since the guide groove 24 is formed on the lid 17, the mechanical strength of the cassette housing 11 is not weakened. Particularly in a very small magnetic tape cassette, various detecting portions such as a tape end sensor and a label area for indication provided on the surface of the housing 11 are not restricted.

As shown in Figure 3, on the surface of the lid main section 17a at both sides, there are formed engaging groove portions 25 in the up and down direction of the lid main section 17a. When the cassette is inserted into the compartment of a cassette magazine as mentioned above, one of the groove portions 25 is engaged with a latch mechanism provided within each compartment of the cassette magazine, so as to retain the cassette within the compartment. Since the latch engagement groove portions 25 are each formed on the front lid 17, the mechanical strength of the housing 11 is not weakened. Particularly in the case of a very small magnetic tape cassette, various detecting sections and the label area for indication provided on the surface of the housing 11 are also not restricted.

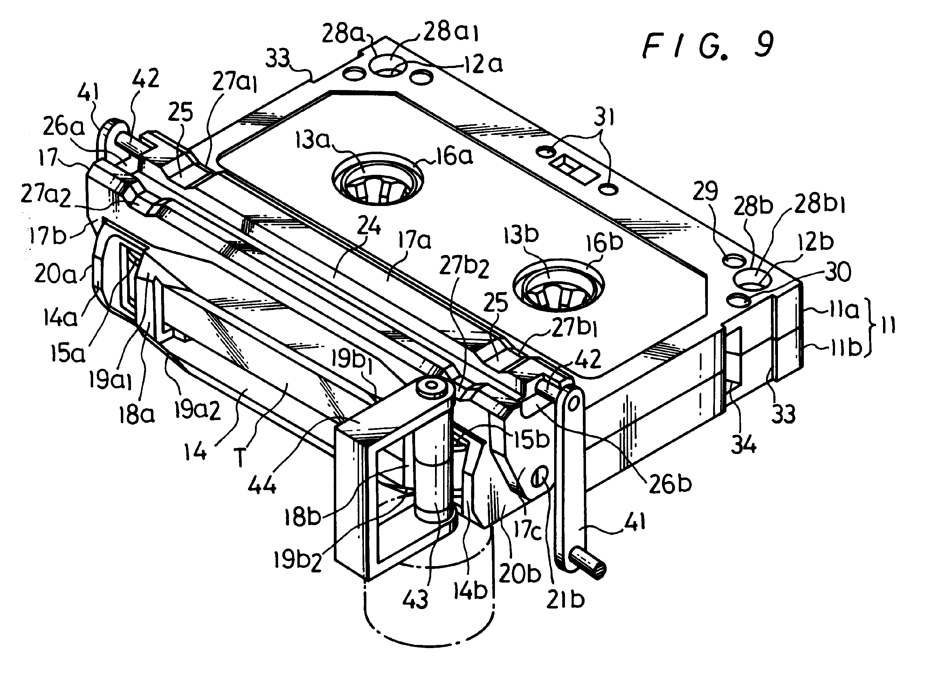

Figure 9 is a perspective view of the embodiment of magnetic tape cassette in use. As Figure 9 shows, on both side surfaces of the lid 17, that is, on both end surfaces of the lid main section 17a, there are respectively formed engaging concave portions 26a and 26b. The concave portions 26a and 26b are respectively engaged with engaging pins 42 of lid opening and/or closing mechanisms 41 provided at a tape cassette loading section of a reproducing apparatus (not shown). When the tape cassette with its lid 17 closed is loaded onto the tape cassette loading section, the engaging pins 42 are engaged with the concave portions 26a and 26b respectively. In this state, the lid opening and/or closing mechanisms 41 are rotated to allow the engaging pins 42 to rotate the lid 17 in the opening direction, thus opening the front opening portion 14 of the housing 11.

When the lid 17 is rotated and the front opening portion 14 of the housing 11 is opened, a capstan 43 is urged against the guide roller 15a or 15b through the upper or lower edge cut-away concave portions 14a1, 14a2 or 14b1, 14b2 of the front opening portion 14 (see Figure 4). To prevent the end of a capstan arm 44 from abutting against the lid 17, cut-away concave portions 27a1 and 27a2, and 27b1 and 27b2 are formed on the corner portions of the upper and lower end edge portions of the lid main section 17a in correspondence with the guide rollers 15a and 15b, respectively, whereby the lid 17 can be spaced apart from the end of the capstan arm 44. Thus, the capstan 43 can positively come into contact with the guide roller 15a and 15b, so that the tape T can be stably transported at a constant speed.

Apertures 28a and 28b for the rear screws 12a and 12b which couple the upper half 11a and the lower half 11b of the housing 11 together are formed so as to produce cavity portions 28a1 and 28b1 above the screw heads 12a1 and 12b1, or the upper half 11a side (Figure 8). These cavity portions 28a1 and 28b1 can be used for various kinds of detection, for example, for detecting the tracks A and B.

As shown in Figure 3, on the top surface portions adjacent to the apertures 28a and 28b and on substantially the central surface portion near the rear edge surface portion of the housing 11, there are respectively formed various detecting portions such as a tape thickness detecting hole 29, an auxiliary detecting hole 30 and a tape type select and/or cassette existence detecting hole 31, and an accidental erasure protection hole 32. Moreover, on each of the rear portions of both the side walls of the housing 11, an eject grip 33 and a changer grip 34 are formed across the upper half 11a and the lower half 11b, respectively.

As described, since the protruded edge surfaces 20a1 and 20b1 are respectively formed on the stepped surface portions 20a and 20b of the housing 11 at such positions that they come into contact with the inner surfaces of the arm portions 17b and 17c when the lid 17 is opened, the lid 17 is prevented from being moved in the lateral direction in its opened state. Thus, the cassette can be accurately loaded onto a loading section of a recording and/or reproducing apparatus with the lid 17 opened, and also the cassette can be smoothly ejected.

Since the lid 17 is opened or closed relative to the housing 11 with the supporting arm portions 17b and 17c spaced apart from the protruded edge surfaces 20a1 and 20b1, the supporting arm portions 17b and 17c are elastically deformed each time the lid main section 17a is brought into contact with the front edges of the housing 11. Thus, the front lid 17 can be rotated without trouble and opened and/or closed in a clicking manner.

Moreover, the positions at which the protruded edge surfaces 20a1 and 20b1 contact both of the supporting arm portions 17b and 17c of the lid 17 are formed are not limited to those shown and described, but may be such that the supporting arm portions 17b and 17c are both brought into contact with the protruded edge surfaces 20a1 and 10b1 as the lid main section 17a is moved from the front opening portion 14 of the housing 11.

Thus, since the front lid pivotably mounted on the cassette housing opens or closes the front opening portion of the magnetic tape cassette by utilizing elastic deformation of the front lid, the front lid can be prevented from being moved in the lateral direction, that is, in the axial direction of the shafts, when the front lid is open, the front lid can be prevented from becoming detached from the cassette housing. Also the front lid is positively retained at the predetermined position when open. Thus, the magnetic tape cassette can be smoothly ejected from a recording and/or reproducing apparatus.

Attention is drawn to our European patent 0 295 921 which discloses and claims similar subject matter, and in particular contains claims to a magnetic tape cassette with grooves in a front lid, like the grooves 25 described above, and claims to a magnetic tape cassette with an asymmetrical guide in a front lid, like the guide 24 described above.

## Claims

1. A magnetic tape cassette comprising:
a cassette housing (1) having a front opening portion (14); and
a front lid (17) formed of a lid main section (17a) and supporting arm portions (17b, 17c) attached perpendicularly to said lid main section (17a) at respective end portions thereof, said front lid (17) being pivotably mounted on the front of said cassette housing (1) by said supporting arm portions (17b, 17c) so as selectively to open and close said front opening portion (14) of said cassette housing (1);
characterized by:
protruded edge portions (20a1, 20b1) formed on said cassette housing(1) at supporting portions (20a, 20b) where said front lid (17) is pivotably secured, said protruded edge portions (20a1, 20b1) being tapered so that said supporting arm portions (17b, 17c) are forced outwardly thereon as said front lid (17) is opened, whereby said lid main section (17a) is elastically deformed towards the axis of the pivotal movement.

2. A magnetic tape cassette according to claim 1, in which each of said supporting arm portions (17b, 17c) has a generally triangular configuration with an apex at a bearing portion (22a, 22b) of said supporting arm portion (17b, 17c) and the opposite base at said lid main section (17c); and
engaging portions (23a1, 23b1) engage with said supporting arm portions (17b, 17c) when said front lid (17) is open, said engaging portions (23a1, 23b1) each having a shape complementary to that of said supporting arm portions (17b, 17c) to engage therewith in the open position of said front lid (17).

3. A magnetic tape cassette comprising:
a cassette housing (1) having a front opening portion (14);
a front lid (17) formed of a lid main section (17a) and supporting arm portions (17b, 17c) attached perpendicularly to said lid main section (17a) at respective end portions thereof, said front lid (17) being pivotably mounted on the front of said cassette housing (1) by said supporting arm portions (17b, 17c) so as selectively to open and close said front opening portion (14) of said cassette housing (1);
characterized by:
stepped portions (14a, 14b) formed on respective side portions of said front opening portion (14), said stepped portions (14a, 14b) being setback as compared with the central portion of said front opening portion (14);
tape guide rollers (15a, 15b) provided in said cassette housing (1) at respective side end portions of said front opening portion (14) of said cassette housing (1) such that said rollers (15a, 15b) are partially visible through said stepped portions (14a, 14b);
guide members (18a, 18b) formed at inner positions of said front opening portion (14) of said cassette housing (1); and
tapered surface portions (19a1, 19b1) formed on said upper and lower edges of said front opening portion (14), said tapered surface portions (19a1, 19b1) being formed so as to decrease in height from the inside of said guide members (18a, 18b) towards said stepped portions, thereby deforming the lid main section (17a) by said stepped portions (14a, 14b) when the lid is opened or closed.

4. A cassette according to claim 1 further comprising:
right and left shafts (21a, 21b) respectively provided on supporting surfaces (17b, 17c) of said front lid (17), said shafts (21a, 21b) having respective different diameters, and supporting arm portions (17b, 17c) each having a generally triangular configuration with an apex at a bearing portion (22a, 22b) of said supporting arm portion (17b, 17c) and the opposite base at said lid main section (17a);
engaging portions (23a1, 23b1) engagable with said supporting arm portions (17b, 17c) when said front lid (17) is open, said engaging portions (23a1, 23b1) each having a shape complementary to that of said supporting arm portions (17b, 17c) to engage therewith in the open position of said front lid (17);
stepped portions (14a, 14b) formed on respective side portions of said front opening portion (14), said stepped portions (14a, 14b) being set back as compared with the central portion of said front opening portion (14);
tape guide rollers (15a, 15b) provided in said cassette housing (1) at respectively side end portions of said front opening portion (14) of said cassette housing (1) such that said rollers (15a, 15b) are partially visible through said stepped portions (14a, 14b);
guide members (18a, 18b) formed at inner positions of said stepped portions (14a, 14b) so as to bridge upper and lower edges of said front opening portion (14) of said cassette housing (1); and
tapered surface portions (19a1, 19b1) formed on said upper and lower edges of said front opening portion (14), said tapered surface portions (19a1, 19b1) being formed so as to decrease in height from the inside of said guide members (18a, 18b) towards said stepped portions (14a, 14b).

## Patentansprüche

1. Magnetbandkassette, die umfaßt:
ein Kassettengehäuse (1), das einen vorderen Öffnungsbereich (14) hat; und
eine Vorderklappe (17), die aus einem Hauptklappenabschnitt (17a) besteht, und Tragarmbereiche (17b, 17c), die senkrecht zum Hauptklappenabschnitt (17a) an dessen entsprechenden Endbereichen befestigt ist, wobei die Vorderklappe (17) drehbar auf der Vorderseite des Kassettengehäuses (1) durch die Tragarmbereiche (17b, 17c) befestigt ist, so daß der vordere Öffnungsbereich (14) des Kassettengehäuses (1) wahlweise geöffnet oder geschlossen werden kann;
gekennzeichnet durch:
hervortretende Randbereiche (20a1, 20b1), die auf dem Kassettengehäuse (1) an den Tragbereichen (20a, 20b) gebildet sind, wo die Vorderklappe (17) drehbar befestigt ist, wobei die hervortretenden Randbereiche (20a1, 20b1) verjüngt sind, so daß die Tragarmbereiche (17b, 17c) darauf nach außen getrieben werden, wenn die Vorderklappe (17) geöffnet wird, wodurch der Hauptklappenabschnitt (17a) in Richtung auf die Drehbewegungsachse elastisch deformiert wird.

2. Magnetbandkassette nach Anspruch 1, bei der jeder der Tragarmbereiche (17b, 17c) eine im wesentlichen dreiecksförmige Form mit einer Spitze an einem Lagerbereich (22a, 22b) des Tragarmbereichs (17b, 17c) und der gegenüberliegenden Basis des Hauptklappenabschnitts (17c) aufweist; und
Eingreifbereiche (23a1, 23b1) in die Tragarmbereiche (17b, 17c) eingreifen, wenn die Vorderklappe (17) offen ist, wobei die Eingreifbereiche (23a1, 23b1) jeweils eine Form aufweisen, die komplementär zu der der Tragarmbereiche (17b, 17c) ist, damit sie darin in der offenen Position der Vorderklappe (17) eingreifen.

3. Magnetbandkassette, die umfaßt:
ein Kassettengehäuse (1), das einen vorderen Öffnungsbereich (14) aufweist;
eine Vorderklappe (17), die aus einem Hauptklappenabschnitt (17a) und Tragarmbereichen (17b, 17c) besteht, die senkrecht zum Hauptklappenabschnitt (17a) an dessen entsprechenden Endbereichen befestigt ist, wobei die Vorderklappe (17) drehbar auf der Vorderseite des Kassettengehäuses (1) durch die Tragarmbereiche (17b, 17c) befestigt ist, so daß der vordere Öffnungsbereich (14) des Kassettengehäuses (1) wahlweise geöffnet oder geschlossen werden kann;
gekennzeichnet durch:
abgesetzte Bereiche (14a, 14b), die auf entsprechenden Seitenbereichen des vorderen Öffnungsbereichs (14) gebildet sind, wobei die abgesetzten Bereiche (14a, 14b) im Vergleich zum zentralen Bereich des vorderen Öffnungsbereichs (14) zurückgesetzt sind;
Bandführungsrollen (15a, 15b), die im Kassettengehäuse (1) an den entsprechenden Seitenendbereichen des vorderen Öffnungsbereichs (14) des Kassettengehäuses (1) vorgesehen sind, so daß die Rollen (15a, 15b) teilweise durch die abgesetzten Bereiche (14a, 14b) sichtbar sind;
Führungsteile (18a, 18b), die an inneren Positionen des vorderen Öffnungsbereichs (14) des Kassettengehäuses (1) gebildet sind; und
verjüngte Oberflächenbereiche (19a1, 19b1), die auf den oberen und unteren Rändern des vorderen Öffnungsbereichs (14) gebildet sind, wobei die verjüngten Oberflächenbereiche (19a1, 19b1) so ausgebildet sind, daß sie bezüglich der Höhe von der Innenseite der Führungsteile (18a, 18b) in Richtung auf die abgesetzten Bereiche abnehmen, wodurch der Hauptklappenabschnitt (17a) durch die abgesetzten Bereiche (14a, 14b) deformiert wird, wenn die Klappe geöffnet oder geschlossen wird.

4. Kassette nach Anspruch 1, die weiter umfaßt: eine rechte und linke Welle (21a, 21b), die jeweils auf Tragoberflächen (17b, 17c) der vorderen Klappe (17) vorgesehen sind, wobei die Wellen (21a, 21b) entsprechende unterschiedliche Durchmesser aufweisen, und wobei die Tragarmbereiche (17b, 17c) jeweils eine im allgemeinen dreiecksförmige Form mit einer Spitze an einem Lagerbereich (22a, 22b) des Tragarmbereichs (17b, 17c) und der gegenüberliegenden Basis am Hauptklappenabschnitt (17a) aufweist;
Eingreifbereiche (23a1, 23b1), die in die Tragarmbereiche (17b, 17c) eingreifen, wenn die Vorderklappe (17) offen ist, wobei die Eingreifbereiche (23a1, 23b1) jeweils eine Form aufweisen, die komplementär zu der der Tragarmbereiche (17b, 17c) ist, so daß sie darin in der offenen Position der Vorderklappe (17) eingreifen;
abgesetzte Bereiche (14a, 14b), die auf entsprechenden Seitenbereichen des vorderen Öffnungsbereichs (14) gebildet sind, wobei die abgesetzten Bereiche (14a, 14b) im Vergleich zum zentralen Bereich des vorderen Öffnungsbereichs (14) zurückgesetzt sind;
Bandführungsrollen (15a, 15b), die im Kassettengehäuse (1) an jeweils einem Seitenendbereich des vorderen Öffnungsbereichs (14) des Kassettengehäuses (1) so vorgesehen sind, daß die Rollen (15a, 15b) teilweise durch diese abgesetzten Bereiche (14a, 14b) hindurch sichtbar sind;
Führungsteile (18a, 18b), die an inneren Positionen der abgesetzten Bereiche (14a, 14b) so gebildet sind, daß sie die oberen und unteren Ränder des vorderen Öffnungsbereichs (14) des Kassettengehäuses (1) überbrücken; und
verjüngte Oberflächenbereiche (19a1, 19b1), die auf den oberen und unteren Ränder des vorderen Öffnungsbereichs (14) gebildet sind, wobei die verjüngten Oberflächenbereiche (19a1, 19b1) so ausgebildet sind, daß sie in bezug auf die Höhe von der Innenseite der Führungsteile (18a, 18b) aus in Richtung auf die abgesetzten Bereiche (14a, 14b) abnehmen.

## Revendications

1. Cassette à bande magnétique comprenant :
un boîtier de cassette (1) ayant une partie d'ouverture avant (14) ; et un couvercle avant (17) formé d'une partie principale de couvercle (17a) et des parties de bras de support (17b, 17c) fixées perpendiculairement à ladite partie principale de couvercle (17a) sur des parties d'extrémité respectives de celui-ci, ledit couvercle avant (17) étant monté de façon pivotante à l'avant dudit boîtier de cassette (1) par lesdites parties de bras de support (17b, 17c) afin d'ouvrir et de fermer sélectivement ladite partie d'ouverture avant (14) dudit boîtier de cassette (1) ;
caractérisée par :
des parties de bord en saillie (20a1, 20b1) formées sur ledit boîtier de cassette (1) sur des parties de support (20a, 20b) où ledit couvercle avant (17) est fixé de façon pivotante, lesdites parties de bord en saillie (20a1, 20b1) étant effilées de sorte que lesdites parties de bras de support (17b, 17c) sont poussées vers l'extérieur sur celui-ci lorsque ledit couvercle avant (17) est ouvert, ladite partie principale de couvercle (17a) est ainsi déformée élastiquement en direction de l'axe du mouvement pivotant.

2. Cassette à bande magnétique selon la revendication 1, dans laquelle chacune desdites parties de bras de support (17b, 17c) a généralement une configuration en triangle avec un apex sur une partie d'appui (22a, 22b) de ladite partie de bras de support (17b, 17c) et la base opposée à ladite partie principale de couvercle (17c) ; et
des parties en prise (23a1, 23b1) en prise avec lesdites parties de bras de support (17b, 17c) lorsque ledit couvercle avant (17) est ouvert, lesdites parties de prise (23a1, 23b1) ayant chacune une forme complémentaire à celle des parties de bras de support (17b, 17c) pour être en prise avec celles-ci dans la position ouverte dudit couvercle avant (17).

3. Cassette à bande magnétique comprenant :
un boîtier de cassette (1) ayant une partie d'ouverture avant (14) ; un couvercle avant (17) formé d'une partie principale de couvercle (17a) et des parties de bras de support (17b, 17c) fixées perpendiculairement à ladite partie principale de couvercle (17a) sur des parties d'extrémité respectives de celui-ci, ledit couvercle avant (17) étant monté de façon pivotante à l'avant dudit boîtier de cassette (1) par lesdites parties de bras de support (17b, 17c) afin d'ouvrir et de fermer sélectivement ladite partie d'ouverture avant (14) dudit boîtier de cassette (1) ;
caractérisée par :
des parties étagées (14a, 14b) formées sur des parties latérales respectives de ladite partie d'ouverture avant (14), lesdites parties étagées (14a, 14b) étant renfoncées en comparaison avec la partie centrale de ladite partie d'ouverture avant (14) ;
des rouleaux de guide de bande (15a, 15b) placés dans ledit boîtier de cassette (1) à des parties d'extrémité latérales respectives de ladite partie d'ouverture avant (14) dudit boîtier de cassette (1) de sorte que lesdits rouleaux (15a, 15b) sont partiellement visibles à travers ladite partie étagée (14a, 14b) ;
des éléments de guide (18a, 18b) formés sur des positions internes de ladite partie d'ouverture avant (14) dudit boîtier de cassette (1) ; et
des parties de surface effilées (19a1, 19b1) formées sur lesdits bords supérieur et inférieur de ladite partie d'ouverture avant (14), lesdites parties de surface effilée (19a1, 19b1) étant formées afin de diminuer en hauteur à partir de l'intérieur desdits éléments de guide (18a, 18b) en direction desdites parties étagées, formant ainsi la partie principale de couvercle (17a) par lesdites parties étagées (14a, 14b) lorsque le couvercle est ouvert ou fermé.

4. Cassette selon la revendication 1 comprenant en outre :
des arbres gauche et droit (21a, 21b) placés respectivement sur des surfaces de support (17b, 17c) dudit couvercle avant (17), lesdits arbres (21a, 21b) ayant des diamètres respectifs différents, et supportant des parties de bras (17b, 17c) ayant chacune généralement une configuration triangulaire avec un apex sur une partie d'appui (22a, 22b) de ladite partie de bras de support (17b, 17c) et la base opposée à ladite partie principale de couvercle (17a) ;
une des parties d'engagement (23a1, 23b1) pouvant être engagée avec lesdites parties de bras de support (17b, 17c) lorsque ledit couvercle avant (17) est ouvert, lesdites parties d'engagement (23al, 23bl) ayant chacune une forme complémentaire à celle desdites parties de bras de support (17b, 17c) pour être en prise avec celles-ci dans la position ouverte dudit couvercle avant (17) ;
des parties étagées (14a, 14b) formées sur des parties latérales respectives de ladite partie d'ouverture avant (14), lesdites parties étagées (14a, 14b) étant renfoncées en comparaison avec celles de la partie centrale de ladite partie d'ouverture avant (14) ;
des rouleaux de guidage de bande (15a, 15b) placés dans ledit boîtier de cassette (1) respectivement sur des parties d'extrémité latérales de ladite partie d'ouverture avant (14) dudit boîtier de cassette (1) de sorte que lesdits rouleaux (15a, 15b) sont visibles partiellement à travers lesdites parties étagées (14a, 14b) ;
des pièces de guidage (18a, 18b) formées sur des positions internes desdites parties étagées (14a, 14b) afin de former un pont entre des parties supérieure et inférieure de ladite partie d'ouverture avant (14) dudit boîtier de cassette (1) ; et
des parties de surface effilées (19a1, 19b1) formées sur lesdits bords supérieur et inférieur de ladite partie d'ouverture avant (14), lesdites parties de surface effilées (19a1, 19b1) étant formées afin de diminuer en hauteur à partir de l'intérieur desdites pièces de guidage (18a, 18b) en direction desdites parties étagées (14a, 14b).
